# EUROPEAN PATENT SPECIFICATION

(11) **EP 3 905 135 B1**
(45) Date of publication and mention of the grant of the patent: **09.04.2025**
(21) Application number: 21169931.9
(22) Date of filing: 22.04.2021
(51) Int. Cl.: G06V 10/774, G06V 10/778, G06V 10/82, G06V 10/94, G06V 20/00

(54) **EDGE LEARNING DISPLAY DEVICE AND METHOD**
KANTENLERNANZEIGEVORRICHTUNG UND VERFAHREN
DISPOSITIF ET PROCÉDÉ D'AFFICHAGE D'APPRENTISSAGE EMBARQUÉ

(30) Priority: 28.04.2020 US 202063016344 P; 03.03.2021 US 202117191296
(43) Date of publication of application: 03.11.2021
(73) Proprietor: MEDIATEK INC., Hsinchu City 30078 (TW)
(72) Inventor: CHEN, Chih-Wei, 30078 Hsinchu City (TW); TSUNG, Pei-Kuei, 30078 Hsinchu City (TW); LEE, Chia-Da, 30078 Hsinchu City (TW); WANG, Yao-Sheng, 30078 Hsinchu City (TW); CHIU, Hsiao-Chien, 30078 Hsinchu City (TW); JEN, Cheng-Lung, 30078 Hsinchu City (TW); TSENG, Yu-Cheng, 30078 Hsinchu City (TW); LO, Kuo-Chiang, 30078 Hsinchu City (TW); LAN, Yu Chieh, 30078 Hsinchu City (TW)
(74) Representative: Hoefer & Partner Patentanwälte mbB

(56) References cited:
- US-A1- 2002 172 419
- US-A1- 2008 317 358
- US-A1- 2019 043 172
- HUANG CHANG ET AL: "Incremental Learning of Boosted Face Detector", ICCV 2007. IEEE 11TH INTERNATIONAL CONFERENCE ON COMPUTER VISION, 2007., 14 October 2007 (2007-10-14), pages 1 - 8, XP055836163, ISBN: 978-1-4244-1630-1, Retrieved from the Internet <URL:https://ieeexplore.ieee.org/stampPDF/getPDF.jsp?tp=&arnumber=4408850&ref=aHR0cHM6Ly9pZWVleHBsb3JlLmllZWUub3JnL2Fic3RyYWN0L2RvY3VtZW50LzQ0MDg4NTA=> [retrieved on 20210831], DOI: 10.1109/ICCV.2007.4408850
- LIAD KAUFMAN ET AL: "Content-Aware Automatic Photo Enhancement", COMPUTER GRAPHICS FORUM : JOURNAL OF THE EUROPEAN ASSOCIATION FOR COMPUTER GRAPHICS, vol. 31, no. 8, 26 September 2012 (2012-09-26), Oxford, pages 2528 - 2540, XP055756964, ISSN: 0167-7055, DOI: 10.1111/j.1467-8659.2012.03225.x
- DAWEI LI ET AL: "RILOD: Near Real-Time Incremental Learning for Object Detection at the Edge", ARXIV.ORG, CORNELL UNIVERSITY LIBRARY, 201 OLIN LIBRARY CORNELL UNIVERSITY ITHACA, NY 14853, 26 March 2019 (2019-03-26), XP081492458
- MURATA YU ET AL: "Automatic Image Enhancement Taking into Account User Preference", 2019 INTERNATIONAL CONFERENCE ON CYBERWORLDS (CW), IEEE, 2 October 2019 (2019-10-02), pages 374 - 377, XP033644915, DOI: 10.1109/CW.2019.00070

## Description

### CROSS-REFERENCE TO RELATED APPLICATIONS

This application claims the benefit of U.S. Provisional Application No. 63/016,344 filed on April 28, 2020.

### TECHNICAL FIELD

Embodiments of the invention relate to a device with image processing capability for enhancing picture quality.

### BACKGROUND

Modern devices with image display capabilities typically perform image enhancement operations when displaying images. For example, a television may enhance images or videos to be displayed on a screen, and a smartphone may enhance images or videos captured by or displayed on the smartphone. However, a conventional device typically performs image enhancement operations based on algorithms or formulations pre-configured by the device manufacturer. There is limited flexibility in adjusting the algorithms or formulations once the device is in use by a consumer. Thus, there is a need for improving the design of an image processing device to allow more flexibility in picture quality adjustment.

US 2002/172419 A1 discloses to use face detection to provide for automatic enhancement of appearances of an image based on knowledge of human faces in the image and to output the enhanced image through an output device or a display device.

LIAD KAUFMAN ET AL: "Content-Aware Automatic Photo Enhancement", COMPUTER GRAPHICS FORUM : JOURNAL OF THE EUROPEAN ASSOCIATION FOR COMPUTER GRAPHICS, vol. 31, no. 8, 26 September 2012 (2012-09-26), pages 2528-2540, ISSN: 0167-7055, DOI: 10.1111/ j.1467-8659.2012.03225.x, discloses a framework for automatic photo enhancement that attempts to take local and global image semantics into account.

US 2008/317358 A1 discloses an image enhancement system that includes an image quality component for assigning an image quality to the images, based on image quality parameters of input digital images. An image categorizing component is provided for assigning a semantic class to an input image based on image content. A model maps assigned image quality and assigned semantic class to candidate aesthetic enhancements, whereby for at least some of the input images, the enhancement is applied in a mode which is dependent on the assigned semantic class.

MURATA YU ET AL: "Automatic Image Enhancement Taking into Account User Preference", 2019 INTERNATIONAL CONFERENCE ON CYBERWORLDS (CW), IEEE, 2 October 2019 (2019-10-02), pages 374-377, DOI: 10.1109/CW.2019.00070, discloses a system for automatic image enhancement so that the appearance of a user-specified image becomes preferable to the user. The system has two components: a preference estimator and a parameter optimizer. The preference estimator learns the user's preference from an example image provided by the user. Then the parameter optimizer determines the best parameter set for the image enhancement functions by using the trained preference estimator.

US 2019/043172 A1 discloses using a machine learning framework to detect a set of one or more attributes of an input image and outputting an output image comprising a modified version of the input image, wherein the input image is modified by modifying at least a subset of the detected set of attributes.

Document Huang C. at al.: "Incremental Learning of Boosted Face Detector" discloses that in order to incrementally learn a boosted cascade, all strong classifier of the cascade must be incrementally learned sequentially, and online training samples need to be filtered in terms of the updated strong classifiers. The same document further discloses that in order to demonstrate the efficacy of this incremental learning algorithm, three face image sets are employed: 765 frontal faces with sun glasses, 765 frontal faces with scarves and 340 half-profile faces in extreme lightening conditions. The same document further discloses that in order to improve the detection rate, a small part of missed faces are manually labeled, and 16 online training samples are generated from each face.

Document Li D. at al.: "RILOD: Near Real-Time Incremental Learning for Object Detection at the Edge" discloses assigning, by a user, a new object class when a detector fails to detect any object in an input image, generating labeled images for the new object class and re-training a model with old and new object classes.

### SUMMARY

The present invention is defined by the appended claims.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
Figure 1 is a block diagram illustrating an image processing circuit to perform picture quality enhancement according to one embodiment.
Figure 2 is a block diagram illustrating automatic labeling according to one embodiment.
Figure 3 is a block diagram illustrating manual labeling according to one embodiment.
Figure 4A illustrates an example of an image with an incorrectly identified scene type attribute according to one embodiment.
Figure 4B illustrates an example of a sample image for manual labeling according to one embodiment.
Figure 5 is a flow diagram illustrating a method for a device to perform image enhancement operations according to one embodiment.
Figure 6 illustrates an example of a device according to one embodiment.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

A device including an image processing circuit is described herein. A user may view images (e.g., a video) on a display panel coupled to the image processing circuit. The image processing circuit generates a training database containing the images that are labeled automatically and/or manually. The image processing circuit further uses the training database to re-train one or more models, based on which one or more attributes of the images are identified. A picture quality (PQ) engine enhances the quality of output images by changing certain image values associated with the identified attributes. If a user is not satisfied with the quality of output images shown on the display panel, the user may provide feedback to the device to help re-train the models that were used for generating the identified attributes. Thus, users can tailor the training database and the models according to their viewing experiences and preferences, and, as a result, the device provides flexibility in image quality adjustment.

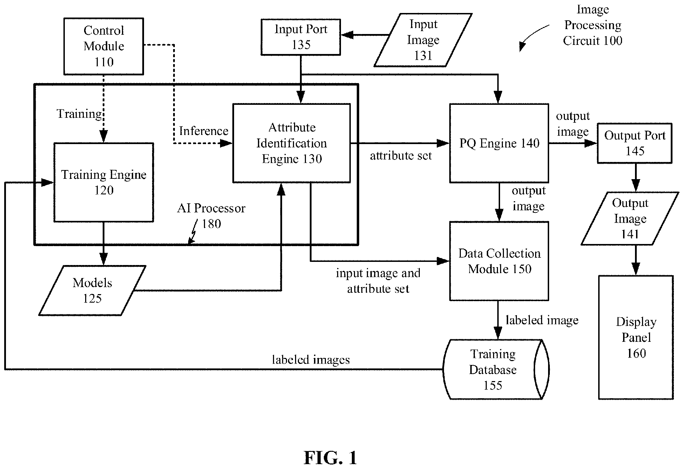

Figure 1 is a block diagram illustrating an image processing circuit 100 performing picture quality enhancement according to one embodiment. The image processing circuit 100 may be part of a device, also referred to as an edge device, such as a television, a smartphone, a computing device, a network-connected device, a gaming device, an entertainment device, an Internet-of-things (IoT) device, or any device capable of processing and displaying images and/or videos. The images to be processed may be captured by the same device, or by a different source and then downloaded, streamed, transferred, or otherwise accessible to the device. Preferably, the image processing circuit 100 may include an artificial intelligence (AI) processor 180 coupled to a picture quality (PQ) engine 140. The AI processor 180 can be trained to infer representative characteristics in input images, and the PQ engine 140 can enhance the picture quality of the input images based on the representative characteristics.

The image processing circuit 100 includes an input port 135 for receiving an input image 131 and an output port 145 for outputting an output image 141, which, in this example, is the processed image of the input image 131. The output image 141 is sent to a display panel 160 for display. For ease of description, an input image and its corresponding output image are provided as an example. It is understood that the following description is applicable when the image processing circuit 100 receives an image sequence (e.g., a video) as input and generates a corresponding image sequence as output.

The image processing circuit 100 further includes a control module 110 which sends control signals (shown in dotted lines) to control and manage on-device training and inference operations. The control module 110 triggers training operations performed by a training engine 120 to train or re-train models 125 with labeled images from a training database 155. The control module 110 also triggers inference operations performed by an attribute identification engine 130 to identify attributes (i.e., representative characteristics) in the input image 131. Preferably, the attribute identification engine 130 may identify the attributes by inference and/or measurement based on one or more models 125. The attribute identified by the attribute identification engine 130 may be a type (e.g., a scene type or an object type), statistic information, or a feature in the image content. For example, the attributes may include a scene type, types of objects in a scene, contrast information (e.g., histogram or statistics), luminance information (e.g., histogram or statistics), edge directions and strength, noise and degree of blur, segmentation information, motion information, etc. Preferably, the attribute may be identified using a machine-learning or deep-learning algorithm.

Preferably, the image processing circuit 100 may be implemented in a system-on-a-chip (SoC). Preferably, the image processing circuit 100 may be implemented in more than one chip in the same electronic device.

Preferably, the attribute identification engine 130 may identify multiple attributes from an image (e.g., a scene type as well as contrast information), which are collectively referred to as an attribute set of the image. The attribute identification engine 130 may further generate a confidence level of an identified attribute; e.g., 75% confidence for the nature scene type. A high confidence level (e.g., when the confidence level exceeds a threshold) indicates that the identified attribute has a correspondingly high probability to be correctly identified. The attribute identification engine 130 sends the attribute set to the PQ engine 140 and a data collection module 150.

The PQ engine 140 performs image enhancement operations on the input image 131 using image processing algorithms based on the attribute set of the input image 131. Different algorithms may be used for different attributes; e.g., an algorithm for noise reduction, another algorithm for a nature scene, and yet another algorithm for a scene type of food. Preferably, the PQ engine 140 may perform one or more of the following operations: de-noising, scaling, contrast adjustment, color adjustment, and sharpness adjustment. For example, the PQ engine 140 may increase the warmth of the image color in a food scene, increase the sharpness in a blurry image, and de-noise in a noisy image. The output of the PQ engine 140 is the output image 141, which is sent to the data collection module 150 and the output port 145.

The data collection module 150 receives the output image 141 from the PQ engine 140, and also receives the input image 131 and the attribute set of the input image 131 from the attribute identification engine 130. Preferably, one or more identified attributes in the attribute set may be attached with respective confidence levels.

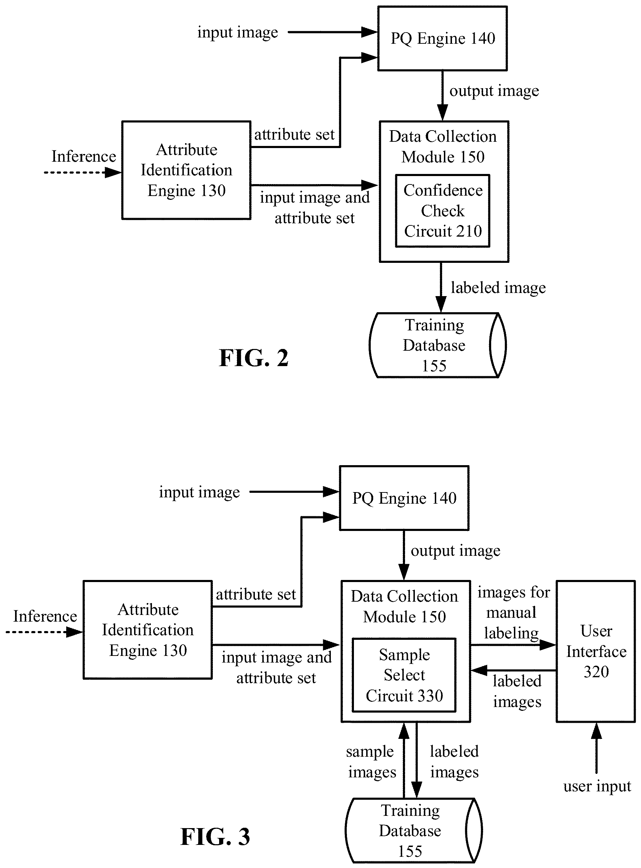

The data collection module 150 is a part of the image processing circuit 100 which provides labeled images to the training database 155. In a manual labeling approach, the input image 131 is labeled by a user. In an automatic labeling approach, the input image 131 is automatically labeled with identified attributes of high confidence levels. The automatic labeling and the manual labeling will be described with reference to Figure 2 and Figure 3, respectively.

The control module 110 may trigger the training engine 120 to perform training operations to train and/or re-train models 125 with the labeled images from the training database 155. The training operations may be performed periodically or based on events. For example, the training operations may start when the image processing circuit 100 enters a sleep state or an idle state. For an edge device with limited processing resources (e.g., a smart TV, a smartphone, an IoT device, etc.), the models 125 may be initially trained on a server such as a cloud server, and re-trained on the edge device by the training engine 120 based on images or videos viewed on the edge device. The training operations change the weights or parameters in the models 125, such as filter weights in an image filter, kernel weights in a neural network kernel, thresholds, etc. Preferably, the training operations may be performed by machine learning, deep learning, or other types of learning operations.

Figure 2 is a block diagram illustrating automatic labeling according to one embodiment. In Figure 2, only the inference part of the image processing circuit 100 is illustrated. In this embodiment, the data collection module 150 includes a confidence check circuit 210, which compares the confidence level of an identified attribute of an input image with a threshold. Different attributes may be compared with different thresholds. The data collection module 150 labels the input image with the identified attribute that exceeds its confidence threshold, and updates the training database 155 with the labeled image for on-device training operations. For example, an input image may be identified to have the following attributes: an urban street scene type, object types of cars, people, and buildings, and 80% contrast. If the urban street scene type is identified to have a high confidence level (i.e., exceeding its confidence threshold), the data collection module 150 is to label the input image as having the urban street scene type. The data collection module 150 may further label the input image with other attributes having confidence levels exceeding their respective confidence thresholds. The labeled image is then stored in the training database 155

Figure 3 is a block diagram illustrating manual labeling according to one embodiment. In Figure 3, only the inference part of the image processing circuit 100 is illustrated. In this embodiment, the data collection module 150 is coupled to a user interface 320 to receive a user's feedback on a displayed image. The user interface 320 may provide a graphical user interface (GUI) on a display panel, a voice-controlled user interface to receive a user's voice commands, or other means for receiving user's input regarding a displayed image. Via the user interface 320, a user may indicate that one or more of the images have poor picture quality and request to start a manual labeling process. Referring also to Figure 1, the output image 141 is an example of a displayed image. In the description hereinafter, the terms "displayed image" and "output image" are used interchangeably.

Preferably, the manual labeling may be performed on demand by a user. A user may mark a displayed image as having poor picture quality; e.g., by selecting a button, and the marking action triggers the start of a manual labeling process. Alternatively, a user may request to start a manual labeling process at any time regarding any image attribute. The image processing circuit 100, in response, requests the user to label the displayed image or the corresponding input image with a correct value or type of an attribute, where the "correctness" may be determined from the user's perspective. Preferably, the user interface 320 may present the user with a number of selectable values or types to replace the device-identified attribute. Using the scene type as an example, the user interface 320 may present the user with options such as "people", "food", "nature", "landmark" to select as the scene type attribute for an image. The user may select one of the presented types (e.g., people) to indicate the correct scene type attribute for the image. Preferably, the user may add a new label such as "animals" to indicate the correct scene type attribute for the image.

To improve the training accuracy, the data collection module 150 may retrieve, from the training database 155, multiple sample images that are similar to the user-labeled image with respect to an attribute of interest. Preferably, the data collection module 150 includes a sample select circuit 330, which selects sample images from the training database 155 and provides the selected sample images to the user. Each of the selected sample images has a confidence level exceeding a predetermined threshold with respect to the attribute of interest. For example, the sample image may be displayed on the display panel along with a list of selectable values or types of an attribute of interest. A user may label a sample image by selecting a value or type from the list. Preferably, a user may add a new value or a new type to the attribute of interest. Using the above example in which scene type is the attribute of interest, each sample image may be presented with a list of people", "food", "nature", "landmark" for the user to select. The user may select from the list. Alternatively, the user may add "animals" to the list as a new option for the scene type. The manual labeling process ends when the user labels all of the sample images provided by the sample select circuit 330.

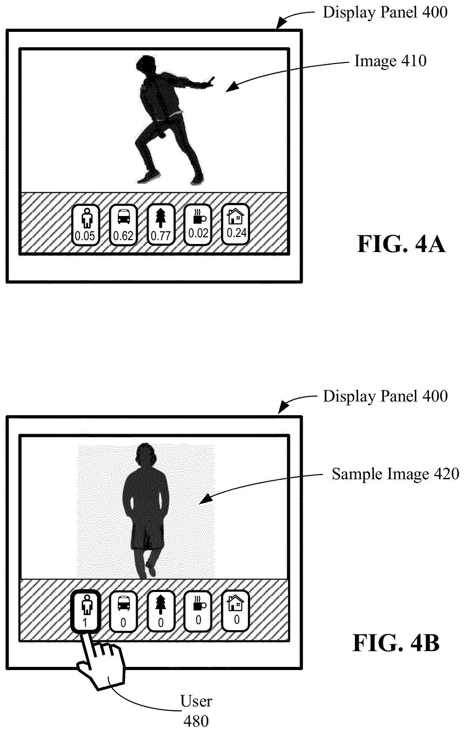

Figure 4A illustrates an example of an output image with an incorrectly identified scene type attribute according to one embodiment. The display panel 400 may be coupled to the output port 145 of the image processing circuit 100 (Figure 1). A user may mark an image 410 of a person as having poor picture quality; e.g., by selecting a button or commanding by voice or other means when the image 410 is displayed. In response, the image processing circuit 100 presents the image 410 with a list of scene types for the scene type attribute. The image processing circuit 100 may also present values, types, or information of other attributes of the image 410 to the user in prior or subsequent lists. For the scene type attribute, the display panel 400 shows the image 410 with the automatically generated confidence level for each scene type: e.g., people (0.05), vehicle (0.62), tree (0.77), drink (0.02), and house (0.23), where each number in the parenthesis indicates the confidence level of the corresponding scene type in the image. According to the confidence levels, the attribute identification engine 130 identifies a tree scene type. The tree scene type in this example is the identified attribute. Based on this identified attribute, the PQ engine 140 may apply an algorithm for enhancing a tree scene to generate an output image.

However, a user can determine, from the image 410, that the correct scene type attribute should be "people." For this image 410, the people scene type is a user-identified attribute that is different from the device-identified attribute of a tree scene type. In this example, the user may select the "people" tab to change the device-identified attribute for the image 410. The user-identified scene type of people becomes a label of the image 410.

After the user labels the image 410 with a corrected attribute, the image processing circuit 100 presents the user with a number of sample images that were previously identified as the people scene type. The user may label these sample images with respect to the scene type to indicate whether or not they were correctly identified as containing the people scene type. Figure 4B illustrates one of the sample images 420 as an example. The data collection module 140 stores the user-labeled images, including the user-labeled image 410 and the user-labeled sample images 420, into the training database 155.

The training engine 120 uses the labeled images from the training database 155 to re-train the models 125. The models 125 may have been trained to detect a feature (e.g., edge directions and strength, segmentation information, motion, etc.) in an image or an image sequence, classify the image content, measure a condition of an image (e.g., contrast, sharpness, brightness, luminance, noise, etc.), etc. The models 125 may be described by mathematical formulations or representations. The models 125 may initially be installed in the image processing circuit 100 and can be re-trained, or refined, with labeled images to learn from the user's image viewing experience on the device.

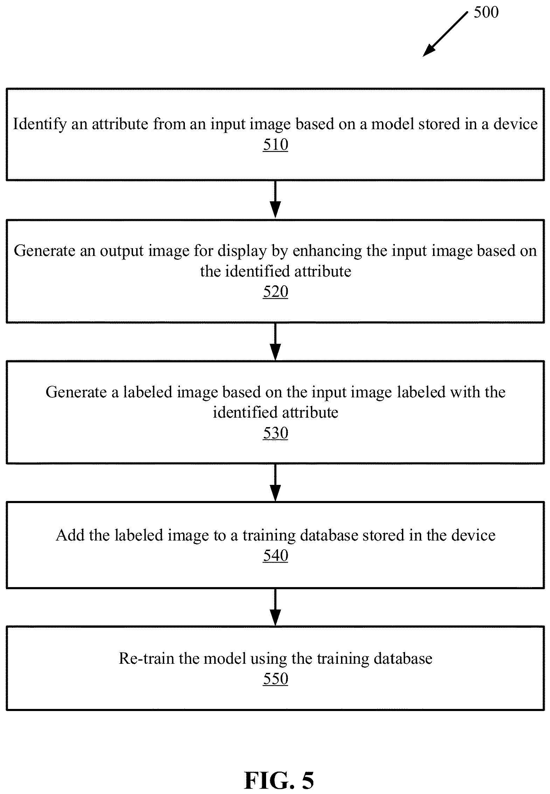

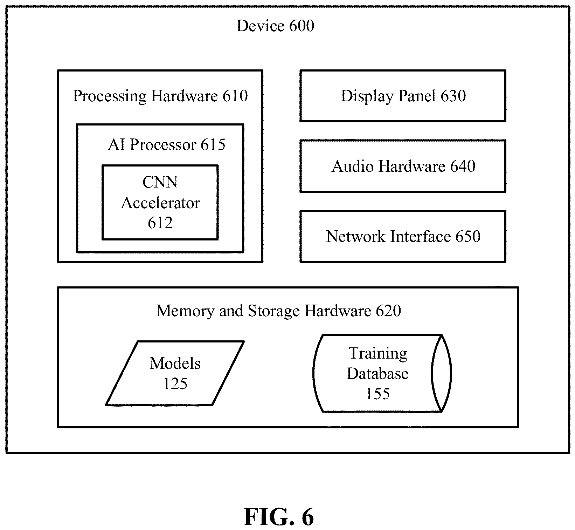

Figure 5 is a flow diagram illustrating a method 500 for image enhancement according to one embodiment. Preferably, the image enhancement operations described herein include generating training data and re-training a model. The method 500 may be performed, for example, by the image processing circuit 100 of Figure 1 and/or the device 600 of Figure 6. It is understood that Figure 1 and Figure 6 are for illustrative purposes only; other image processing devices may perform the method 500.

The method 500 begins at step 510 with the device identifying an attribute from an input image based on a model stored in the device. At step 520, the device generates an output image for display by enhancing the input image based on the identified attribute. At step 530, the device generates a labeled image based on the input image labeled with the identified attribute. At step 540, the device adds the labeled image to a training database stored in the device. At step 550, the device re-trains the model using the training database. Preferably, the model may be re-trained on the device.

Figure 6 illustrates an example of a device 600 according to one embodiment. The device 600 may include the image processing circuit 100 of Figure 1, which performs the aforementioned image enhancement operations. The device 600 includes processing hardware 610. Preferably, the processing hardware 610 may include one or more processors, such as central processing units (CPUs), graphics processing units (GPUs), digital processing units (DSPs), multimedia processors, and other general-purpose and/or special-purpose processing circuitry. Preferably, the processing hardware 610 may include hardware circuitry including but not limited to: the attribute identification engine 130, the PQ engine 140, the data collection module 150, and the training engine 120 in Figure 1. Additionally or alternatively, the processing hardware 610 may include an artificial intelligence (AI) processor 615, which may be an example of the AI processor 180 in Figure 1. Referring back to Figure 1, preferably, the training engine 120 and/or the attribute identification engine 130 may be part of the AI processor 615. Preferably, the AI processor 615 may be part of a GPU. Preferably, the AI processor 615 may include a hardware accelerator, such as a convolution neural network (CNN) accelerator 612.

The CNN accelerator 612 includes hardware components specialized for accelerating neural network operations by convolutional operations, fully-connected operations, activation, pooling, normalization, element-wise mathematical computations, etc. Preferably, the CNN accelerator 612 includes multiple compute units and memory (e.g., Static Random Access Memory (SRAM)), where each compute unit further includes multipliers and adder circuits, among others, for performing mathematical operations such as multiply-and-accumulate (MAC) operations to accelerate the convolution, activation, pooling, normalization, and other neural network operations. The CNN accelerator 612 may perform fixed and floating-point neural network operations. In connection with the picture quality enhancement described herein, the CNN accelerator 612 may perform training and inference operations described in connection with Figure 1.

The device 600 further includes a memory and storage hardware 620 coupled to the processing hardware 610. The memory and storage hardware 620 may include memory devices such as dynamic random access memory (DRAM), SRAM, flash memory, and other non-transitory machine-readable storage medium; e.g., volatile or non-volatile memory devices. The memory and storage hardware 620 may further include storage devices, for example, any type of solid-state or magnetic storage device. Preferably, the memory and storage hardware 620 may store the models 125 and the training database 155 of Figure 1. Preferably, the memory and storage hardware 620 may store instructions which, when executed by the processing hardware 610, cause the processing hardware 610 to perform the aforementioned image enhancement operations, such as the method 500 of Figure 5.

The device 600 may also include a display panel 630 to display information such as images, videos, messages, Web pages, games, texts, and other types of text, image, and video data. The images may be labeled by a user via a user interface, such as a keyboard, a touchpad, a touch screen, a mouse, a touch screen, etc. The device 600 may also include audio hardware 640, such as a microphone and a speaker, for receiving and generating sounds. The audio hardware 640 may also provide a user interface for sending and receiving voice commands.

Preferably, the device 600 may also include a network interface 650 to connect to a wired and/or wireless network for transmitting and/or receiving voice, digital data and/or media signals. It is understood the embodiment of Figure 6 is simplified for illustration purposes. Additional hardware components may be included.

The operations of the flow diagram of Figure 5 have been described with reference to the exemplary embodiments of Figure 1 and Figure 6. However, it should be understood that the operations of the flow diagram of Figure 5 can be performed by embodiments of the invention other than the embodiments of Figure 1 and Figure 6, and the embodiments of Figure 1 and Figure 6 can perform operations different than those discussed with reference to the flow diagram. While the flow diagram of Figures 5 shows a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, and can be practiced with modification and alteration within the scope of the appended claims. The description is thus to be regarded as illustrative instead of limiting.

## Claims

1. A device (600) comprising:
a user interface (320); and
an image processing circuit (100), comprising:
a memory (620);
an attribute identification engine (130) to identify an attribute from an input image (131) based on a model (125) stored in the memory (620); and
a picture quality, in the following also referred to as PQ, engine (140) to generate an output image (141) for display by enhancing the input image (131) based on the identified attribute;
**characterized in that** the image processing circuit (100) further comprises:
a data collection module (150) to generate a labeled image based on the input image (131) labeled with the identified attribute, and to add the labeled image to a training database (155) stored in the memory (620); and
a training engine (120) to re-train the model (125) using the training database (155);
wherein the data collection module (150) is further operative to:
receive, via the user interface (320), a user-identified attribute which changes the identified attribute for the input image (131);
generate the labeled image based on the input image (131) labeled with the user-identified attribute;
retrieve a plurality of sample images from the training database (155), each sample image having a confidence level exceeding a predetermined threshold with respect to the user-identified attribute; and
provide each sample image for the user to label to thereby generate labeled images for the training database (155).

2. The device (600) of claim 1, wherein the image processing circuit (100) further comprises an artificial intelligence, in the following also referred to as Al, processor (180) which includes, at least in part, the attribute identification engine (130) operative to execute a machine-learning or deep-learning algorithm to identify the attribute; and/or
wherein the image processing circuit (100) further comprises a control module (110) to control re-training of the model (125) on the device (600) based on an event or a periodic schedule.

3. The device (600) of claim 1 or 2, wherein the user interface (320) provides a list of options with respect to the identified attribute for selection by a user in response to an indication from the user.

4. The device (600) of any one of claims 1 to 3, wherein the data collection module (150) is further operative to:
automatically label the input image (131) with the identified attribute when a confidence level with respect to the identified attribute exceeds a predetermined threshold; and
update the training database (155) with the automatically labeled input image.

5. The device (600) of any one of claims 1 to 4, wherein the attribute identification engine (130) is further operative to identify a plurality of attributes from an image sequence according to a plurality of models (125), wherein each model (125) is used for identifying one of the attributes; and/or
wherein the PQ engine (140) is operative to perform the image processing including one or more of: de-noising, scaling, contrast adjustment, color adjustment, and sharpness adjustment.

6. A method performed by a device (600) for image enhancement, comprising:
identifying (510) an attribute from an input image based on a model stored in the device (600); and
generating (520) an output image for display by enhancing the input image based on the identified attribute;
**characterized by**:
generating (530) a labeled image based on the input image labeled with the identified attribute;
adding (540) the labeled image to a training database stored in the device (600); and
re-training (550) the model using the training database;
wherein generating the labeled image further comprises:
receiving a user-identified attribute which changes the identified attribute for the input image;
generating the labeled image based on the input image labeled with the user-identified attribute; and
wherein the method further comprises:
retrieving a plurality of sample images from the training database, each sample image having a confidence level exceeding a predetermined threshold with respect to the user-identified attribute; and
displaying each sample image for the user to label to thereby generate labeled images for the training database.

7. The method of claim 6, wherein identifying the attribute further comprises:
identifying the attribute using a machine-learning or deep-learning algorithm; and/or
further comprising:
re-training the model on the device (600) based on an event or a periodic schedule.

8. The method of claim 6 or 7, further comprising:
displaying a list of options with respect to the identified attribute for selection by a user in response to an indication from the user.

9. The method of any one of claims 6 to 8, wherein generating the labeled image further comprises:
automatically labeling the input image with the identified attribute when a confidence level with respect to the identified attribute exceeds a predetermined threshold; and
updating the training database with the automatically labeled input image.

10. The method of any one of claims 6 to 9, further comprising:
identifying a plurality of attributes from an image sequence according to a plurality of models, wherein each model is used for identifying one of the attributes; and/or
wherein processing the input image further comprises performing one or more of: de-noising, scaling, contrast adjustment, color adjustment, and sharpness adjustment.

11. The device (600) of any one of claims 1 to 5, or the method of any one of claims 6 to 10, wherein attributes of the input image include one or more of: a scene type, an object type in a scene, contrast information, luminance information, edge directions or strength, noise information, segmentation information, and motion information.

## Patentansprüche

1. Vorrichtung (600), umfassend:
eine Benutzerschnittstelle (320); und
eine Bildverarbeitungsschaltung (100), umfassend:
einen Speicher (620);
eine Attributidentifizierungsmaschine (130) zum Identifizieren eines Attributs aus einem Eingabebild (131) basierend auf einem Modell (125), das in dem Speicher (620) gespeichert ist; und
eine Bildqualitäts, im Folgenden auch als PQ bezeichnet, -maschine (140) zum Erzeugen eines Ausgabebildes (141) zur Anzeige durch Verbessern des Eingabebildes (131) basierend auf dem identifizierten Attribut;
**dadurch gekennzeichnet, dass** die Bildverarbeitungsschaltung (100) ferner umfasst:
ein Datensammelmodul (150) zum Erzeugen eines gekennzeichneten Bildes basierend auf dem Eingabebild (131), das mit dem identifizierten Attribut gekennzeichnet ist, und zum Hinzufügen des gekennzeichneten Bildes zu einer Trainingsdatenbank (155), die in dem Speicher (620) gespeichert ist; und
eine Trainingsmaschine (120) zum Neutrainieren des Modells (125) unter Verwendung der Trainingsdatenbank (155);
wobei das Datensammelmodul (150) ferner betreibbar ist zum:
Empfangen, über die Benutzerschnittstelle (320), eines benutzeridentifizierten Attributs, das das identifizierte Attribut für das Eingabebild (131) ändert;
Erzeugen des gekennzeichneten Bildes basierend auf dem Eingabebild (131), das mit dem benutzeridentifizierten Attribut gekennzeichnet ist;
Abrufen einer Vielzahl von Musterbildern aus der Trainingsdatenbank (155), wobei jedes Musterbild ein Konfidenzniveau aufweist, das einen vorbestimmten Schwellenwert in Bezug auf das benutzeridentifizierte Attribut überschreitet; und
Bereitstellen jedes Musterbildes für den Benutzer zum Kennzeichnen, um **dadurch gekennzeichnete** Bilder für die Trainingsdatenbank (155) zu erzeugen.

2. Vorrichtung (600) nach Anspruch 1, wobei die Bildverarbeitungsschaltung (100) ferner einen Künstliche-Intelligenz-, im Folgenden auch als KI bezeichnet, -Prozessor (180) umfasst, der zumindest teilweise die Attributidentifizierungsmaschine (130) beinhaltet, die betriebsfähig ist, um einen Maschinenlern- oder Tiefenlern-Algorithmus auszuführen, um das Attribut zu identifizieren; und/oder
wobei die Bildverarbeitungsschaltung (100) ferner ein Steuermodul (110) zum Steuern des Neutrainierens des Modells (125) auf der Vorrichtung (600) basierend auf einem Ereignis oder einem periodischen Zeitplan umfasst.

3. Vorrichtung (600) nach Anspruch 1 oder 2, wobei die Benutzerschnittstelle (320) eine Liste von Optionen in Bezug auf das identifizierte Attribut zur Auswahl durch einen Benutzer als Reaktion auf eine Angabe von dem Benutzer bereitstellt.

4. Vorrichtung (600) nach einem der Ansprüche 1 bis 3, wobei das Datensammelmodul (150) ferner betreibbar ist zum:
automatischen Kennzeichnen des Eingabebildes (131) mit dem identifizierten Attribut, wenn ein Konfidenzniveau in Bezug auf das identifizierte Attribut einen vorbestimmten Schwellenwert überschreitet; und
Aktualisieren der Trainingsdatenbank (155) mit dem automatisch gekennzeichneten Eingabebild.

5. Vorrichtung (600) nach einem der Ansprüche 1 bis 4, wobei die Attributidentifizierungsmaschine (130) ferner betreibbar ist, um eine Vielzahl von Attributen aus einer Bildsequenz gemäß einer Vielzahl von Modellen (125) zu identifizieren, wobei jedes Modell (125) zum Identifizieren eines der Attribute verwendet wird; und/oder
wobei die PQ-Maschine (140) betreibbar ist, um die Bildverarbeitung durchzuführen, die eines oder mehrere von Folgendem beinhaltet: Entrauschen, Skalierung, Kontrastanpassung, Farbanpassung und Schärfeanpassung.

6. Verfahren, das von einer Vorrichtung (600) zur Bildverbesserung durchgeführt wird, umfassend:
Identifizieren (510) eines Attributs aus einem Eingabebild basierend auf einem Modell, das in der Vorrichtung (600) gespeichert ist; und
Erzeugen (520) eines Ausgabebildes zur Anzeige durch Verbessern des Eingabebildes basierend auf dem identifizierten Attribut;
**gekennzeichnet durch**:
Erzeugen (530) eines gekennzeichneten Bildes basierend auf dem Eingabebild, das mit dem identifizierten Attribut gekennzeichnet ist;
Hinzufügen (540) des gekennzeichneten Bildes zu einer Trainingsdatenbank, die in der Vorrichtung (600) gespeichert ist; und
Neutrainieren (550) des Modells unter Verwendung der Trainingsdatenbank;
wobei das Erzeugen des gekennzeichneten Bildes ferner umfasst:
Empfangen eines benutzeridentifizierten Attributs, das das identifizierte Attribut für das Eingabebild ändert;
Erzeugen des gekennzeichneten Bildes basierend auf dem Eingabebild, das mit dem benutzeridentifizierten Attribut gekennzeichnet ist; und
wobei das Verfahren ferner umfasst:
Abrufen einer Vielzahl von Musterbildern aus der Trainingsdatenbank, wobei jedes Musterbild ein Konfidenzniveau aufweist, das einen vorbestimmten Schwellenwert in Bezug auf das benutzeridentifizierte Attribut überschreitet; und
Anzeigen jedes Musterbildes für den Benutzer zum Kennzeichnen, um **dadurch** gekennzeichnete Bilder für die Trainingsdatenbank zu erzeugen.

7. Verfahren nach Anspruch 6, wobei das Identifizieren des Attributs ferner umfasst:
Identifizieren des Attributs unter Verwendung eines Maschinenlern- oder Tiefenlern-Algorithmus; und/oder
ferner umfassend:
Neutrainieren des Modells auf der Vorrichtung (600) basierend auf einem Ereignis oder einem periodischen Zeitplan.

8. Verfahren nach Anspruch 6 oder 7, ferner umfassend:
Anzeigen einer Liste von Optionen in Bezug auf das identifizierte Attribut zur Auswahl durch einen Benutzer als Reaktion auf eine Angabe von dem Benutzer.

9. Verfahren nach einem der Ansprüche 6 bis 8, wobei das Erzeugen des gekennzeichneten Bildes ferner umfasst:
automatisches Kennzeichnen des Eingabebildes mit dem identifizierten Attribut, wenn ein Konfidenzniveau in Bezug auf das identifizierte Attribut einen vorbestimmten Schwellenwert überschreitet; und
Aktualisieren der Trainingsdatenbank mit dem automatisch gekennzeichneten Eingabebild.

10. Verfahren nach einem der Ansprüche 6 bis 9, ferner umfassend:
Identifizieren einer Vielzahl von Attributen aus einer Bildsequenz gemäß einer Vielzahl von Modellen, wobei jedes Modell zum Identifizieren eines der Attribute verwendet wird; und/oder
wobei das Verarbeiten des Eingabebildes ferner das Durchführen von einem oder mehreren von Folgendem umfasst: Entrauschen, Skalierung, Kontrastanpassung, Farbanpassung und Schärfeanpassung.

11. Vorrichtung (600) nach einem der Ansprüche 1 bis 5 oder Verfahren nach einem der Ansprüche 6 bis 10, wobei Attribute des Eingabebildes eines oder mehrere von Folgendem beinhalten: einen Szenentyp, einen Objekttyp in einer Szene, Kontrastinformationen, Luminanzinformationen, Kantenrichtungen oder -stärke, Rauschinformationen, Segmentierungsinformationen und Bewegungsinformationen.

## Revendications

1. Dispositif (600) comprenant :
une interface utilisateur (320) ; et
un circuit de traitement d'image (100), comprenant :
une mémoire (620) ;
un moteur d'identification d'attribut (130) pour identifier un attribut à partir d'une image d'entrée (131) sur la base d'un modèle (125) stocké dans la mémoire (620) ; et
un moteur de qualité d'image, ci-après également appelé PQ, (140) pour générer une image de sortie (141) pour affichage en améliorant l'image d'entrée (131) sur la base de l'attribut identifié ;
**caractérisé en ce que** le circuit de traitement d'image (100) comprend en outre :
un module de collecte de données (150) pour générer une image étiquetée sur la base de l'image d'entrée (131) étiquetée avec l'attribut identifié, et pour ajouter l'image étiquetée à une base de données d'apprentissage (155) stockée dans la mémoire (620) ; et
un moteur d'apprentissage (120) pour réapprendre le modèle (125) en utilisant la base de données d'apprentissage (155) ;
dans lequel le module de collecte de données (150) est en outre opérationnel pour :
recevoir, via l'interface utilisateur (320), un attribut identifié par l'utilisateur qui change l'attribut identifié pour l'image d'entrée (131) ;
générer l'image étiquetée sur la base de l'image d'entrée (131) étiquetée avec l'attribut identifié par l'utilisateur ;
récupérer une pluralité d'images échantillons à partir de la base de données d'apprentissage (155), chaque image échantillon ayant un niveau de confiance dépassant un seuil prédéterminé par rapport à l'attribut identifié par l'utilisateur ; et
fournir chaque image échantillon à l'utilisateur pour étiqueter afin de générer ainsi des images étiquetées pour la base de données d'apprentissage (155).

2. Dispositif (600) selon la revendication 1, dans lequel le circuit de traitement d'image (100) comprend en outre un processeur d'intelligence artificielle, ci-après également appelé IA, (180) qui inclut, au moins en partie, le moteur d'identification d'attribut (130) opérationnel pour exécuter un algorithme d'apprentissage automatique ou d'apprentissage profond pour identifier l'attribut ; et/ou
dans lequel le circuit de traitement d'image (100) comprend en outre un module de commande (110) pour commander le réapprentissage du modèle (125) sur le dispositif (600) sur la base d'un événement ou d'un programme périodique.

3. Dispositif (600) selon la revendication 1 ou 2, dans lequel l'interface utilisateur (320) fournit une liste d'options par rapport à l'attribut identifié pour une sélection par un utilisateur en réponse à une indication provenant de l'utilisateur.

4. Dispositif (600) selon l'une quelconque des revendications 1 à 3, dans lequel le module de collecte de données (150) est en outre opérationnel pour :
étiqueter automatiquement l'image d'entrée (131) avec l'attribut identifié lorsqu'un niveau de confiance par rapport à l'attribut identifié dépasse un seuil prédéterminé ; et
mettre à jour la base de données d'apprentissage (155) avec l'image d'entrée étiquetée automatiquement.

5. Dispositif (600) selon l'une quelconque des revendications 1 à 4, dans lequel le moteur d'identification d'attribut (130) est en outre opérationnel pour identifier une pluralité d'attributs à partir d'une séquence d'images selon une pluralité de modèles (125), dans lequel chaque modèle (125) est utilisé pour identifier l'un des attributs ; et/ou
dans lequel le moteur PQ (140) est opérationnel pour effectuer le traitement d'image incluant un ou plusieurs parmi : un débruitage, une mise à l'échelle, un ajustement de contraste, un ajustement de couleur, et un ajustement de netteté.

6. Procédé effectué par un dispositif (600) pour une amélioration d'image, comprenant :
l'identification (510) d'un attribut à partir d'une image d'entrée sur la base d'un modèle stocké dans le dispositif (600) ; et
la génération (520) d'une image de sortie pour affichage en améliorant l'image d'entrée sur la base de l'attribut identifié ;
**caractérisé par** :
la génération (530) d'une image étiquetée sur la base de l'image d'entrée étiquetée avec l'attribut identifié ;
l'ajout (540) de l'image étiquetée à une base de données d'apprentissage stockée dans le dispositif (600) ; et
le réapprentissage (550) du modèle en utilisant la base de données d'apprentissage ;
dans lequel la génération de l'image étiquetée comprend en outre :
la réception d'un attribut identifié par l'utilisateur qui change l'attribut identifié pour l'image d'entrée ;
la génération de l'image étiquetée sur la base de l'image d'entrée étiquetée avec l'attribut identifié par l'utilisateur ; et
dans lequel le procédé comprend en outre :
la récupération d'une pluralité d'images échantillons à partir de la base de données d'apprentissage, chaque image échantillon ayant un niveau de confiance dépassant un seuil prédéterminé par rapport à l'attribut identifié par l'utilisateur ; et
l'affichage de chaque image échantillon à l'utilisateur pour étiqueter afin de générer ainsi des images étiquetées pour la base de données d'apprentissage.

7. Procédé selon la revendication 6, dans lequel l'identification de l'attribut comprend en outre :
l'identification de l'attribut en utilisant un algorithme d'apprentissage automatique ou d'apprentissage profond ; et/ou
comprenant en outre :
le réapprentissage du modèle sur le dispositif (600) sur la base d'un événement ou d'un programme périodique.

8. Procédé selon la revendication 6 ou 7, comprenant en outre :
l'affichage d'une liste d'options par rapport à l'attribut identifié pour une sélection par un utilisateur en réponse à une indication provenant de l'utilisateur.

9. Procédé selon l'une quelconque des revendications 6 à 8, dans lequel la génération de l'image étiquetée comprend en outre :
l'étiquetage automatique de l'image d'entrée avec l'attribut identifié lorsqu'un niveau de confiance par rapport à l'attribut identifié dépasse un seuil prédéterminé ; et
la mise à jour de la base de données d'apprentissage avec l'image d'entrée étiquetée automatiquement.

10. Procédé selon l'une quelconque des revendications 6 à 9, comprenant en outre :
l'identification d'une pluralité d'attributs à partir d'une séquence d'images selon une pluralité de modèles, dans lequel chaque modèle est utilisé pour identifier l'un des attributs ; et/ou
dans lequel le traitement de l'image d'entrée comprend en outre l'exécution d'un ou plusieurs parmi : un débruitage, une mise à l'échelle, un ajustement de contraste, un ajustement de couleur, et un ajustement de netteté.

11. Dispositif (600) selon l'une quelconque des revendications 1 à 5, ou procédé selon l'une quelconque des revendications 6 à 10, dans lequel des attributs de l'image d'entrée incluent un ou plusieurs parmi : un type de scène, un type d'objet dans une scène, des informations de contraste, des informations de luminance, des directions ou une intensité de bord, des informations de bruit, des informations de segmentation, et des informations de mouvement.
